# EUROPEAN PATENT APPLICATION

(11) **EP 1 619 887 A1**
(43) Date of publication of application: **25.01.2006**
(21) Application number: 04727755.3
(22) Date of filing: 15.04.2004
(51) Int. Cl.: H04N 5/445

(54) **RADIO TERMINAL, BASE DEVICE, WIRELESS SYSTEM, RADIO TERMINAL CONTROL METHOD, RADIO TERMINAL CONTROL PROGRAM, AND COMPUTER-READABLE RECORDING MEDIUM CONTAINING THE CONTROL PROGRAM**

(30) Priority: 17.04.2003 JP 2003113359; 13.04.2004 JP 2004118359
(71) Applicant: SHARP KABUSHIKI KAISHA, Osaka-shi, Osaka 545-8522 (JP)
(72) Inventor: TOKIMOTO, Toyoshi, Tochigi 324-0047 (JP); TANAKA, Mitsunori, Tochigi 320-0061 (JP)
(74) Representative: Müller, Frithjof E.
(86) International application number: PCT/JP2004/005423
(87) International publication number: WO 2004/093441

(57) **Abstract**

A TV main unit (5) includes a second SS-CPU (85), a second AV selector (67), a TV microcomputer (66), and an OSD synthesizing section (93a). The second SS-CPU (85) receives television program video data and EPG data from a wireless center (3). The second AV selector (67) generates video based on the television program video data. The TV microcomputer (66) generates EPG video based on the EPG data. The OSD synthesizing section (93a) superposes an EPG video image on a television broadcast video image displayed on a TV monitor (71). This improves a speed for responding to a user's input for instructing the EPG video image to be displayed, when the EPG video image is to be superposed on the television program video image.

## Description

### TECHNICAL FIELD

The present invention relates to a wireless terminal, a base device, a wireless system, a wireless terminal control method, a wireless terminal control program, and a computer-readable recording medium storing the control program.

### BACKGROUND ART

In recent years, many receiving/reproducing systems for video and audio etc. (AV system) have been developed which employ a thin liquid crystal display as a monitor section for reproducing (displaying) video. Liquid crystal displays have such significant advantages as realizing a large-sized screen display while downsizing the display in weight and thickness.

Further, such a system is disclosed in which a tuner (base device) and a monitor (wireless terminal) sections of a television receiver are provided separately, and a video signal and an audio signal are transmitted from the tuner section to the monitor section wirelessly. In this system, the tuner section, which is separately provided and connected to an antenna line, chooses a channel and transmits a video and an audio signals of the selected channel to the monitor section wirelessly, so that the video and the audio signals can be reproduced (see Patent References 1 and 2, for example).
[Patent Reference 1]
   Japanese Unexamined Patent Publication, No. 160927/2001 (Tokukai 2001-160927)
[Patent Reference 2]
   Japanese Unexamined Patent Publication, No. 358966/2001 (Tokukai 2001-358966)

Further, with the foregoing structure in which a tuner and a monitor sections of a television receiver are separately provided and wirelessly connected, a user's operation can be allowed by causing the monitor section to display a GUI (graphical user interface). Specifically, at the monitor side, a key is manipulated for operating the GUI, and the key for e.g. starting/ending the GUI or moving a cursor up/down/left/right is converted to a command to be used for wireless transmission. At the tuner side, the command related to the key for starting/ ending the GUI or moving the cursor up/down/left/right is received, decoded, and then outputted.using an OSD function for generating the GUI at the tuner side. Further, video signals including GUI video are outputted to a transmitting section for wireless AV transmission, converted to an AV stream, and outputted to the monitor side. The video signals including the GUI video are received and decoded by the monitor side, so that display is carried out on a monitor.

In the above system, the signals are decoded into an MPEG2 format in such a manner that an OSD is superimposed at the tuner side, and then transmitted to the monitor side. At the monitor side, the encoded signals are decoded to carry out display on the monitor section. This causes a delay time involved in encoding the signals into MPEG2 and decoding the signals, so that a display response to an input for activating OSD is degraded and GUI display quality is deteriorated, which have conventionally been problems.

As to the above problems, the following describes further details. In the system, when the monitor section receives a user's input for instructing a GUI video image to be displayed, a request command for displaying the GUI video image is transmitted to the tuner section. Receiving the request command, the tuner section carries out a process for generating the GUI video. The tuner section superposes the GUI video data on video signals related to a television broadcast, encodes the superposed video signals into the MPEG2 format, and transmits the encoded signals to the monitor section. Then, the monitor section decodes the encoded signals supplied from the tuner section, and displays video, in which the GUI video is superposed on the television broadcast video.

In the system, the GUI video is superposed on the television broadcast video at the tuner section side. This arrangement requires steps of encoding and transmitting the video signals, in which the GUI video is superposed on the television broadcast video, and receiving and decoding the encoded data at the monitor side. It should be noted that encoding and decoding data, in which GIU video is superposed on television broadcast video, delays data transmission more significantly than encoding and decoding television broadcast video solely. Thus, in such a system, a response to a user's input for instructing a GUI video image to be displayed is degraded. In addition, degraded communication between the tuner section and the monitor section deteriorates not only display of the television broadcast video image on the monitor section, but also display of the GUI video image superposed on the television broadcast video image.

The present invention was arrived at in view of the above problems, and an object of the present invention is to provide a wireless terminal, a base device, a wireless system, a wireless terminal control method, a wireless terminal control program, and a computer-readable recording medium storing the control program, which suppress deterioration of a response for carrying out, on a display section, display of first video and second video superposed on the first video.

### DISCLOSURE OF INVENTION

To attain the foregoing object, a wireless terminal of the present invention, which transmits/receives data to/from a base device, includes receiving means for receiving, from the base device, first video data and associated data being associated with the base device and/or the wireless terminal; first video generating means for generating a first video image based on the first video data; second video generating means for generating a second video image based on the associated data; and video superposing means for superposing the second video image on the first video image and displaying the superposed video image on a display section.

Further, to attain the foregoing object, a wireless terminal control method for transmiting/receiving data to/from a base device may include the steps of: receiving, from the base device, first video data and associated data being associated with the base device and/or the wireless terminal; generating a first video image based on the first video data; generating a second video image based on the associated data; and superposing the second video image on the first video image and displaying the superposed video image on a display section.

According to the above arrangement, the first video data is received from the base device and the first video image is generated based on the first video data, while the associated data is received from the base device and the second video image is generated based on the associated data. Further, the second video image is superposed on the first video image, and the superposed video image is displayed on the display section. That is, according to the arrangement, the step for generating the second video image and the step for superposing the second video image on the first video image are carried out in the wireless terminal. Thus, compared to a conventional arrangement in which these steps are carried out on the base device side, a speed for responding to a user' s input for instructing a superposed video image to be displayed, in which the second video image is superposed on the first video image, is improved because there is no need of encoding and decoding data of the superposed video image.

Note that, the first video image includes a television broadcast video image received by the base device, and a video image reproduced by a videocassette recorder or a DVD (digital versatile disk) recorder. The television broadcast video image includes not only a television video image for ground wave analog broadcasts and ground wave digital broadcasts, but also a broadcasting satellite video image, a data broadcast video image, a video image outputted from a set top box receiving CATV broadcasts (CATV broadcast video). Further, the associated data includes, for example, data indicating a setting status of the base device and/or the wireless terminal, television broadcast data received by the base device (e.g. EPG data), and the like. The second video image includes a GUI video image for operating the base device and/or the wireless terminal, an image indicating a setting status of the base device and/or the wireless terminal, an EPG (electronic program guide) video image, and the like.

To attain the foregoing object, the base device of the present invention includes transmitting means for transmitting the first video data and the associated data to the wireless terminal.

According to the above arrangement, the step for generating the second video image and the step for superposing the second video image on the first video image are carried out in the wireless terminal. Therefore, compared to an arrangement in which these steps are carried out on the base device side, a speed for responding to a user's input for instructing a superposed video image to be displayed, in which the second video image is superposed on the first video image, is improved because there is no need of encoding and decoding data of the superposed video image.

To attain the foregoing object, a wireless system of the present invention includes the wireless terminal, and the base device having the transmitting means for transmitting the first video data and the associated data to the wireless terminal.

According to the above arrangement, the step for generating the second video image and the step for superposing the second video image on the first video image are carried out in the wireless terminal. Therefore, compared to an arrangement in which these steps are carried out on the base device side, a speed for responding to a user's input for instructing a superposed video image to be displayed, in which the second video image is superposed on the first video image, is improved because there is no need of encoding and decoding data of the superposed video image.

Note that, the wireless terminal may be realized by a computer. In this case, a computer-readable recording medium storing a wireless terminal control program, which realizes the wireless terminal in the computer by causing the computer to function as the sections, is within the scope of the present invention.

For a fuller understanding of the nature and advantages of the invention, reference should be made to the ensuing detailed description taken in conjunction with the accompanying drawings.

### BRIEF DESCRIPTION OF DRAWINGS

Fig.1 is a functional block diagram illustrating an exemplary structure of a wireless AV system according to one embodiment of the present invention.
Fig. 2 is a functional block diagram illustrating a wireless center constituting the wireless AV system shown in Fig. 1.
Fig. 3 is a functional block diagram illustrating a TV main unit constituting the wireless AV system shown in Fig. 1.
Fig. 4 is a view schematically illustrating an exemplary structure of data transmitted/received between the wireless center and the TV main unit, which constitute the wireless AV system shown in Fig. 1
Fig. 5 is a view schematically illustrating a remote control device constituting the wireless AV system shown in Fig. 1.
Fig. 6 is a view representing a GUI video image displayed on the TV main unit shown in Fig. 3, in which Fig. 6(a) is a view representing a menu screen, Fig. 6(b) is a view representing a channel setting screen, and Fig. 6(c) is a view representing a channel setting screen after an auto preset function was selected.
Fig. 7 is a view representing a GUI video image displayed on the TV main unit shown in Fig. 3, in which Fig. 7(a) is a view representing a channel setting image when an execution of the auto preset function is determined, Fig. 7(b) is a view representing a channel setting image to be displayed while the auto preset function is being activated, and Fig. 7(c) is a view representing an image in which channel numbers of preset channels are displayed.
Fig. 8 is a flow chart representing a flow of steps carried out in the wireless AV system shown in Fig. 1.
Fig. 9 is an explanatory view schematically illustrating the wireless AV system shown in Fig. 1.
Fig. 10 is a functional block diagram illustrating a structure of an OSD synthesizing section included in the TV main unit shown in Fig. 3.
Fig. 11 is a flow chart representing procedural steps of an auto preset process, which is carried out in the TV main unit, according to the present embodiments of the present invention.
Fig. 12 is a flow chart representing procedural steps of an auto preset process, which is carried out in the wireless center 3, according to one embodiment of the present invention.
Fig. 13 is a flow chart representing procedural steps for displaying an EPG video image according to one embodiment of the present invention.
Fig. 14(a) is a view illustrating a video image displayed on the TV main unit shown in Fig. 3, Fig. 14(b) is a view representing a video image displayed on the TV main unit when a degraded communication status occurs between the wireless center and the TV main unit, and Fig. 14(c) is a view representing a video image displayed on the TV main unit shown in Fig. 3 when a degraded communication status occurs between the wireless center and the TV main unit.

### BEST MODE FOR CARRYING OUT THE INVENTION

### [First Embodiment]

A wireless AV system of the present invention (television receiving/reproducing system) includes a monitor side (AV output device) and a wireless center having a tuner. The monitor and the wireless center are separately provided, and bidirectional communication is typically performed therebetween. In the system, the monitor side includes an input section for operating a GUI. Further, the system has an arrangement in which (i) an OSD (on screen display) associated with content received at the input section is generated and activated on a display section at the monitor side, and (ii) control data is determined with the OSD activated on the display section and then transmitted to the tuner side.

With regard to the wireless AV systems of the embodiments of the present invention, the following describes, as an example, a system which carries out display or the like of television broadcasts at the monitor side. The GUI displayed on the monitor side provides, for example, display of various menus in the wireless AV system.

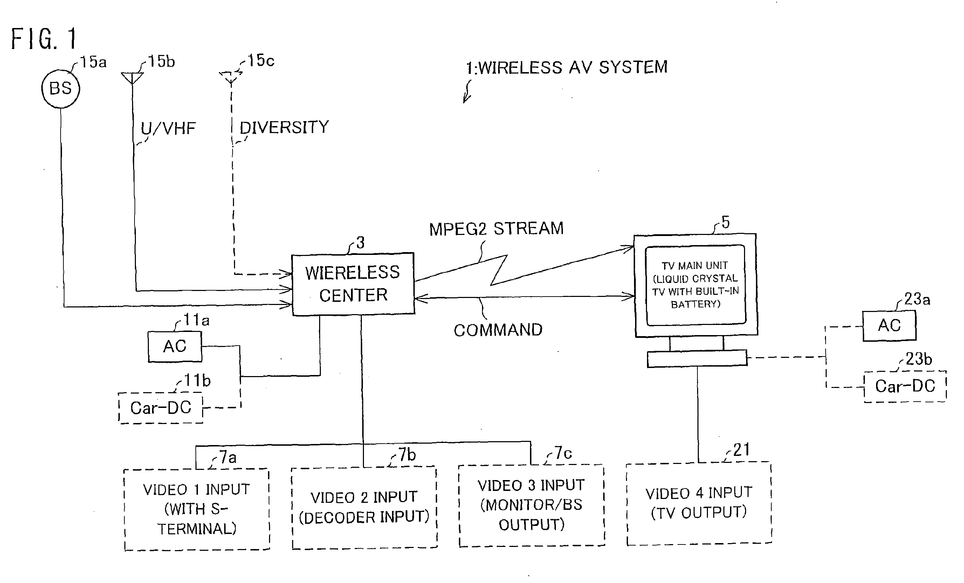

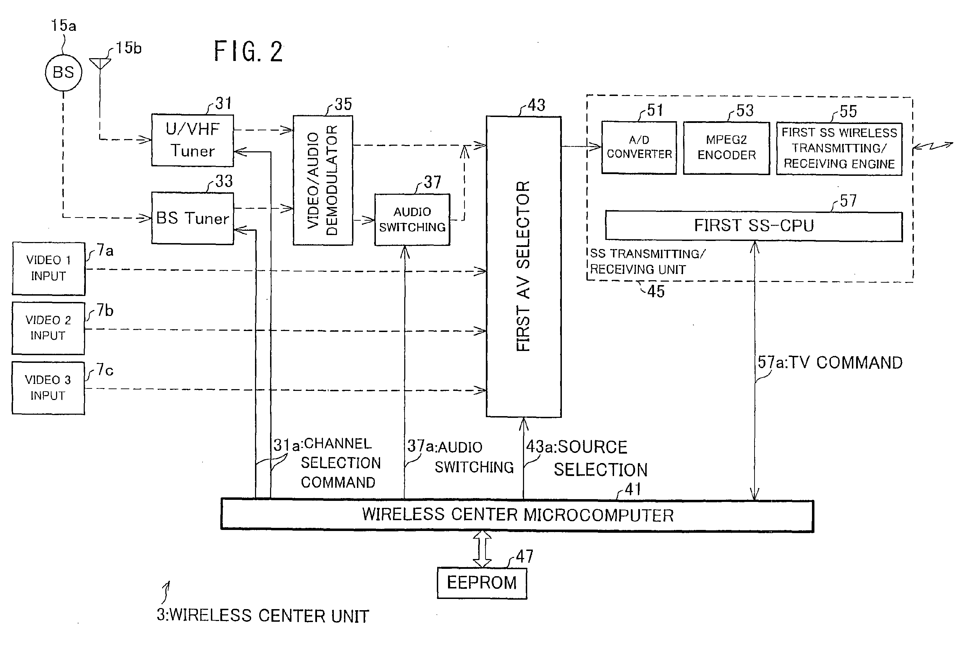

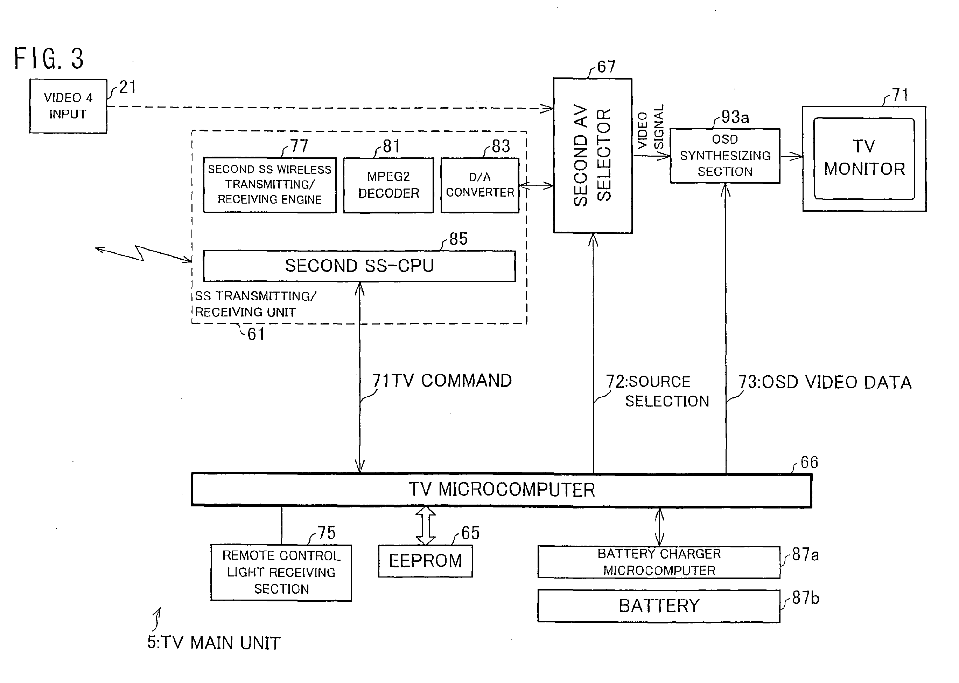

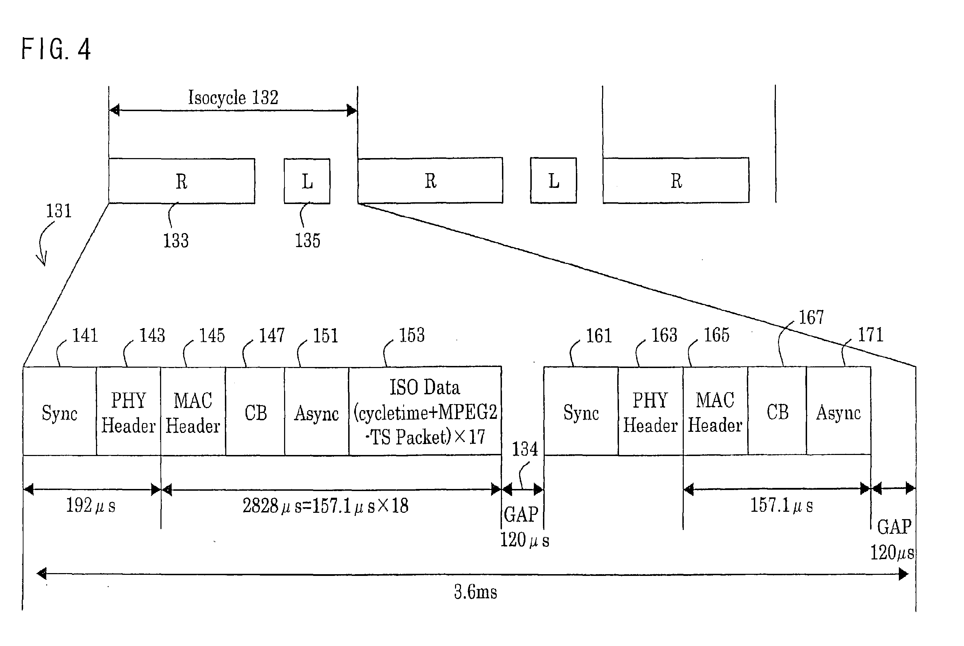

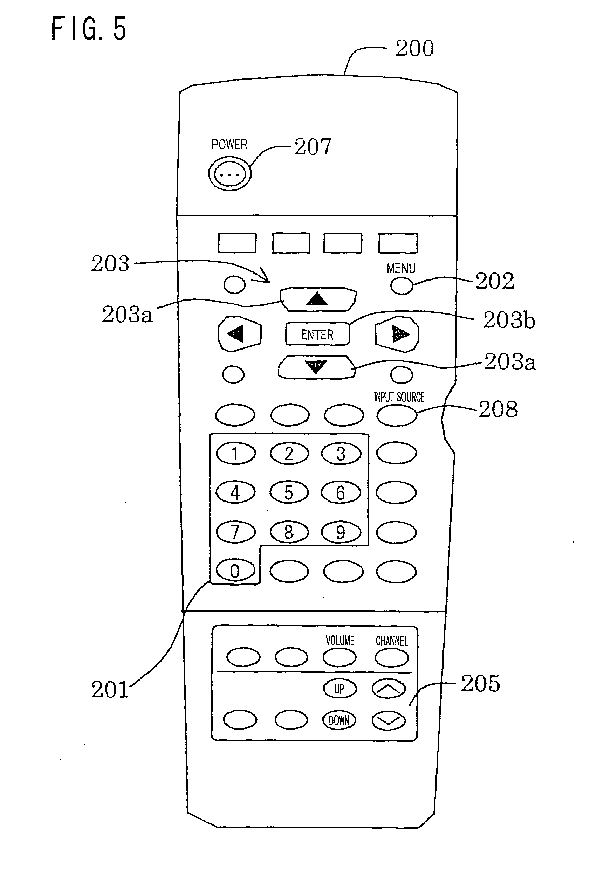

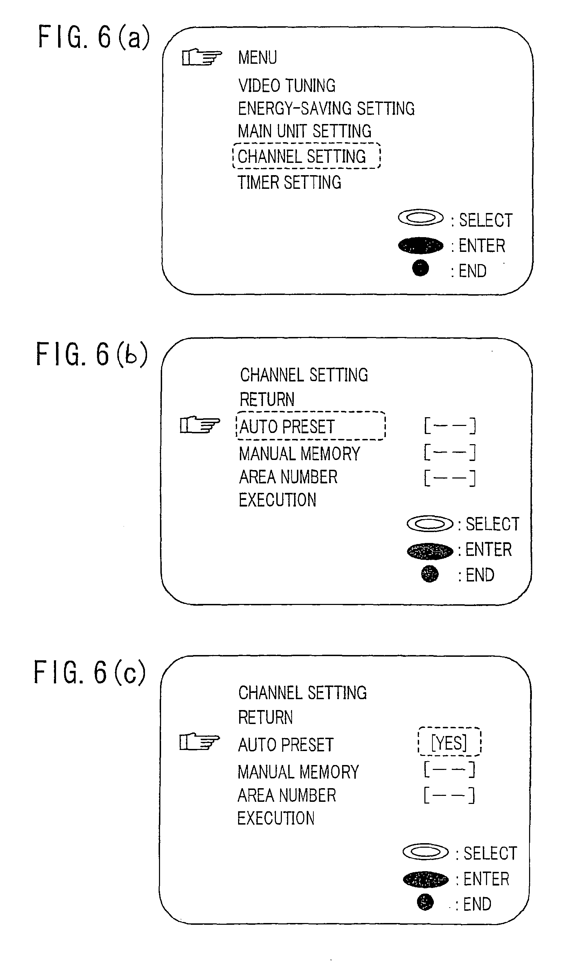

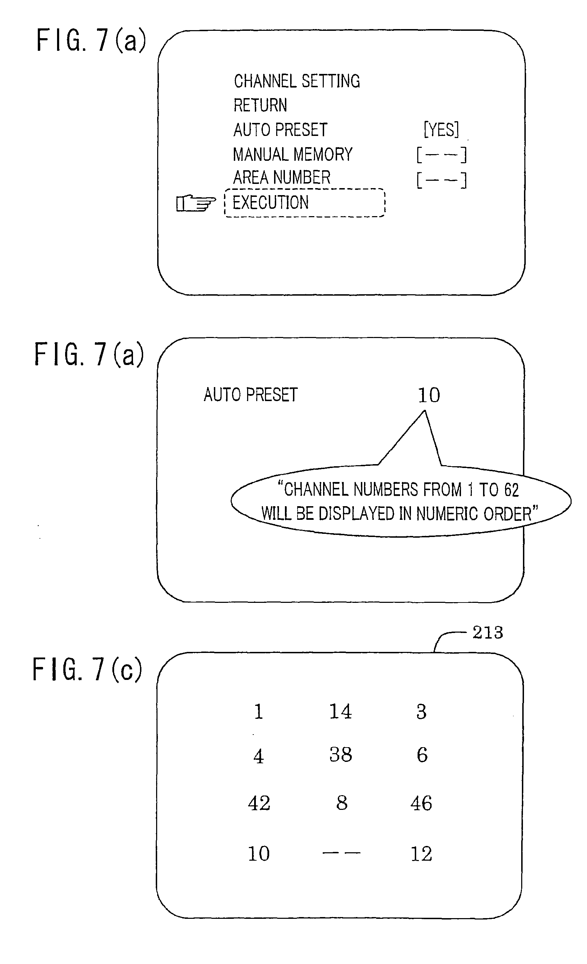

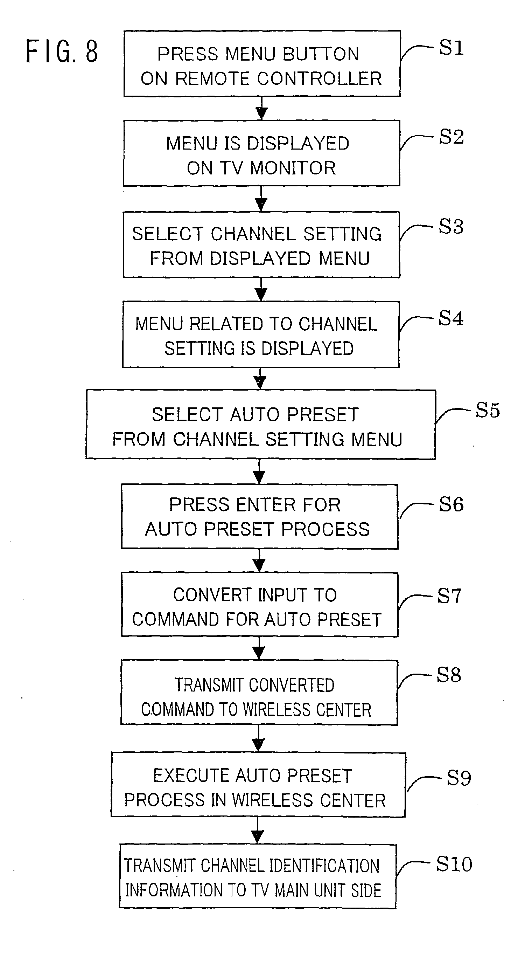

With reference to figures, a wireless AV system of one embodiment of the present invention is described below. Fig. 1 is a view illustrating an exemplary structure of the wireless AV system of the present embodiment. Fig. 2 is a functional block diagram illustrating an exemplary structure of a wireless center (tuner side device) in the wireless AV system of the present embodiment. Fig. 3 is a functional block diagram illustrating an exemplary structure of a TV main unit (monitor side device) in the wireless AV system of the present embodiment. Fig. 4 is a view illustrating an exemplary structure of data transmitted/received between the wireless center and the TV main unit in the wireless AV system of the present embodiment. Fig. 5 is a view illustrating an exemplary structure of a remote control device. Figs. 6 and 7 are views representing example of displaying a GUI video image in the wireless AV system according to the embodiments of the present invention. Fig. 8 is a flow chart representing a flow of exemplary steps in the wireless AV system of the present embodiments.

As illustrated in Fig. 1, the wireless AV system 1 of the present embodiment includes a wireless center 3 at the tuner side, and a TV main unit 5 incorporating a liquid crystal monitor with a built-in battery.

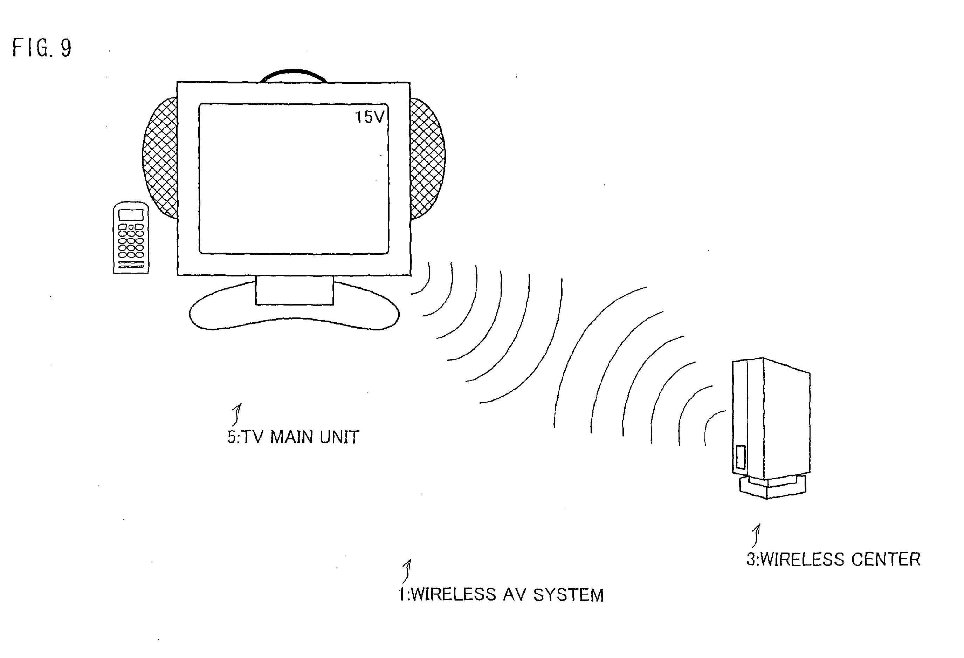

As illustrated in Fig. 9, the TV main unit 5 is wireless with a built-in battery. Further, the TV main unit 5 has a remote controller so as to operate a videocassette recorder or the like by remote control. The wireless center 3 is connected to: (i) a BS antenna, a U/V antenna, or the like; (ii) an AV device such as a DVD player, a videocassette recorder, or the like; (iii) a set top box for CATV; (iv) or the like. Video and/or audio data of a TV program or the like is transmitted wirelessly from the wireless center 3 to the TV main unit 5.

Described next is a specific structure of the wireless AV system 1. As illustrated in Fig. 1, the wireless center 3 includes a video 1 input terminal 7a (with S-terminal) for switching external input, a video 2 input (decoder input) terminal 7b, a video 3 input terminal 7c (also serves as monitor/BS output), an AC power terminal 11a, and a Car-DC terminal 11b, a BS antenna 15a, a UHF/VHF antenna 15b, and a diversity antenna 15c. On the other hand, the TV main unit 5 includes a video 4 input (TV output) terminal 21, an AC power terminal 23a, and a Car-DC terminal 23b.

The wireless center 3 and the TV main unit 5 are connected to perform communication by wireless specified under IEEE802.11b. From the wireless center 3 to the TV main unit 5, MPEG2 stream information is sent by radio, while other command data or the like is mutually transmitted through bidirectional communication.

With reference to Fig. 2, the following describes an exemplary structure of the wireless center 3. Explanations are omitted for equivalent constituting elements described in Fig. 1. As illustrated in Fig. 2, the wireless center 3 includes a wireless center microcomputer 41 for controlling the entire wireless center 3, a first AV selector 43, and a SS (spread spectrum) transmitting/receiving unit 45. The video 1 input terminal (external input 1) 7a, the video 2 input terminal (external input 2) 7b, and the video 3 input terminal (external input 3) 7c are terminals for, for example, inputting video signals and/or audio signals from an external device such as a videocassette recorder, a DVD recorder, or the like to a first AV selector.

Further, the wireless center 3 includes a BS tuner 33 connected to the BS antenna 15a, and a U/V tuner 31 connected to the UHF/VHF antenna 15b. The BS tuner 33 receives BS (broadcasting satellite) broadcasts and the U/V tuner 31 receives television broadcasts (analog or digital broadcasts). In the wireless center 3, a channel selection process is carried out, based on a channel selection command 31 a supplied from the wireless center microcomputer 41. After the channel selection, signals from the U/V tuner 31 or the BS tuner 33 are inputted to a video/audio demodulator 35 and demodulated to video signals (first video data) and audio signals. Further, on the modulated audio signals, an audio conversion process is carried out by an audio conversion section 37 based on an audio conversion command 37a, which is supplied from the wireless center microcomputer 41. The modulated video signals, and the audio signals on which the audio conversion process is carried out are inputted to the first AV selector 43. At the first AV selector 43, a source selection process is carried out based on a source selection signal 43a supplied from the wireless center microcomputer 41, and selected video and audio signals are inputted to the SS transmitting/receiving unit 45.

Further, the wireless center microcomputer 41 is capable of reading and writing various data stored in an EEPROM (first memory means) 47. The EEPROM 47 is an electrically rewritable nonvolatile memory which stores various data such as a control program of the wireless center microcomputer 41, communication control data, a transmission channel change program, and the like.

The SS transmitting/receiving unit 45 includes (i) an A/D converter 51, (ii) an MPEG2 encoder 53, (iii) a first SS wireless transmitting/receiving engine 55, and (iv) a first SS-CPU (transmitting means) 57 which controls (i), (ii), and (iii). The video and audio signals supplied from the first AV selector 43 are converted from analog to digital signals by the A/D converter 51, and encoded into an MPEG2 format by the MPEG2 encoder 53 for example, based on a TV command (transmitting/ receiving command) 57a supplied from the wireless center microcomputer 41. The encoded data is transmitted to the TV main unit 5 side by the first SS wireless transmitting/receiving engine 55 under the control of the first SS-CPU 57. Further, the first SS wireless transmitting/receiving engine 55 communicates various commands (data) bidirectionally with the TV main unit 5 under the control of the first SS-CPU 57.

With reference to Fig. 3, the following describes a structure of the TV main unit 5. As illustrated in Fig. 3, the TV main unit 5 includes a TV microcomputer 66, a SS transmitting/receiving unit 61, a second AV selector 67, a TV monitor (liquid crystal display, display section) 71, and a remote control light receiving section 75, which receives input from a remote control device (Fig. 5). The SS transmitting/receiving unit 61 includes (i) a second SS wireless transmitting/receiving engine 77, (ii) an MPEG2 decoder 81, (iii) a D/A converter 83, and (iv) a second SS-CPU 85 which controls (i), (ii), and (iii). Further, the TV main unit 5 is a battery driven type, and includes a battery 87b and a battery charger microcomputer 87a.

The TV microcomputer 66 is capable of reading and writing various data stored in an EEPROM (second memory means) 65. The EEPROM 65 is an electrically rewritable nonvolatile memory which stores various data such as a control program for the TV main unit 5, communication control data, a transmission channel change program, and the like.

The stream information (i.e., the encoded data), which has been sent from the wireless center 3 side and encoded into the MPEG2 format, is received by the second SS wireless transmitting/receiving engine 77 in the SS transmitting/receiving unit 61 according to an instruction from the second SS-CPU (receiving means) 85, which has received a TV command (transmitting/receiving command) 71 from the TV microcomputer 66. The stream information is decoded by the MPEG2 decoder 81, and converted from digital to analog signals by the D/A converter 83. Video and audio signals generated through the D/A conversion are sent to the second AV selector 67. At the second AV selector 67, selection is performed based on a source selection command 67a from the TV microcomputer 66 between (i) the video and audio signals and (ii) video and audio signals supplied from the video 4 input terminal (external input 4) 21 (e.g. video signals or the like from an external device such as a videocassette recorder, etc.). Selected video signals (first video data) and audio signals are transmitted to the TV monitor 71 through an OSD synthesizing section 93a. In this way, display of the video image based on the video signals selected by the second AV selector (first video generating means) 67 is carried out on the TV monitor 71. Note that, the following description is on the premise that a television broadcast video image received by the wireless center 3 is displayed on the TV monitor 71. As used herein, the television broadcast video image includes not only a television video image for ground wave analog broadcasts and ground wave digital broadcasts, but also a satellite broadcast video image, a data broadcast video image, a CATV broadcast video image, and the like. Further, a video image to be displayed on the TV monitor 71 (first video image) is not limited to the television broadcast video image, and may be reproduced by a videocassette recorder or a DVD recorder.

Further, the TV main unit 5 of the present embodiment has an OSD function. The following describes an arrangement in which the OSD function is realized. Note that, the OSD function of the present embodiment refers to a function of superposing, in a portion of a video image displayed on the TV monitor 71, another video image (hereinafter referred to as an OSD video image).

The OSD video image (second video image) of the present embodiment is generated based on information being associated with the wireless center 3 and the TV monitor 71. Examples of the OSD video image are (i) a video image indicating a setting status (selected channel number, output volume, brightness of a video image, etc.) of the wireless center 3 or the TV monitor 71, (ii) a video image indicating channel numbers of receivable channels, (iii) a GUI video image for operating the wireless center 3 or the TV monitor 71, and (iv) a video image based on data other than television broadcast video signals received by the wireless center 3 (e.g. EPG).

When a GUI video image is displayed as the OSD video image on the TV monitor 71, a user can perform various operations such as switching a channel for channel selection, adjusting the volume, adjusting brightness of a video image to be displayed, setting a timer or the like through the GUI video image. Further, the user may perform selection, determination, deletion, etc. of various control commands displayed on the GUI video image by operating a remote control device 200 (Fig. 5) or a controller (not shown) installed to the TV main unit 5.

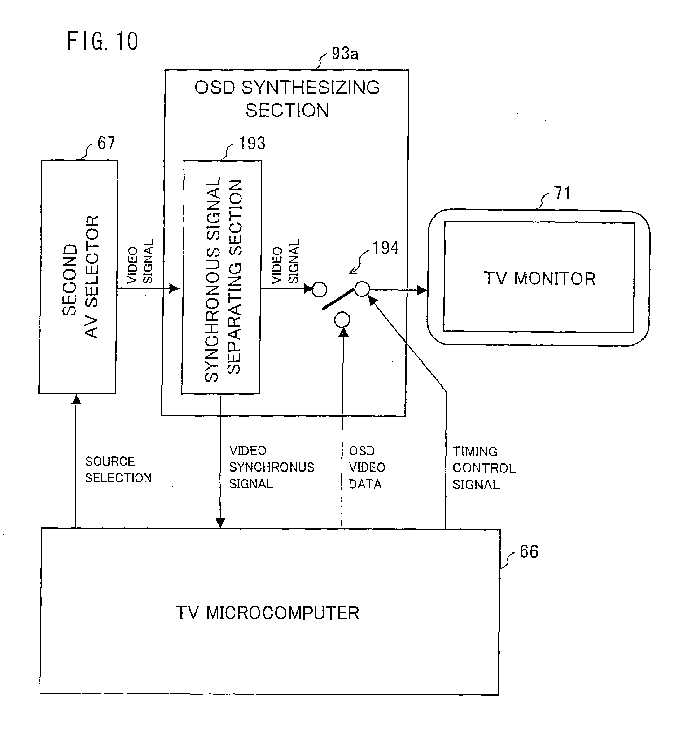

In the present embodiment, when the user inputs an instruction for activating the OSD to the TV main unit 5 by operating the remote control device 200, according to the instruction, the TV microcomputer (second video generating means) 66 generates OSD video data based on the various data stored in the EEPROM 65, and transmits the OSD video data to the OSD synthesizing section 93a (Fig. 10). Then, the OSD synthesizing section (video superposing means) 93a carries out a process for superposing an OSD video image on a television broadcast video image displayed on the TV monitor 71. As to the OSD synthesizing section 93a, the following description provides further details.

As illustrated in Fig. 10, the OSD synthesizing section 93a includes a synchronous signal separating section 193 and a switch 194. The switch 194 switches between connection and disconnection between the synchronous signal separating section 193 and the TV monitor 71, and between the TV microcomputer 66 and the TV monitor 71, based on a timing control signal supplied from the TV microcomputer 66. The synchronous signal separating section 193 separates video synchronous signals from video signals sent from the second AV selector 67. Then, the synchronous signal separating section 193 outputs the video signals to the switch 194 while outputting the video synchronous signals to the TV microcomputer 66. The synchronous signal separating section 193 serves as a blocking function.

In the above arrangement, the synchronous signal separating section 193 separates the video synchronous signals from the received video signals, and transmits the video signals to the switch 194 and the video synchronous signals to the TV microcomputer 66, respectively.

Receiving the input from the user for instructing the OSD to be activated, the TV microcomputer 66 generates OSD video data according to the instruction and outputs the OSD video data to the OSD synthesizing section 93a. Further, the TV microcomputer 66 generates, based on the video synchronous signals from the synchronous signal separating section 193, a timing control signal for indicating a timing at which to switch the switch 194, and transmits the timing control signal to the switch 194.

Based on the timing control signal, the switch 194 switches between connection and disconnection between the synchronous signal separating section 193 and the TV monitor 71, and between the TV microcomputer 66 and the TV monitor 71. Thus, when the user's input for instructing the OSD to be activated is received by the TV main unit 5, the OSD video data is transmitted from the TV microcomputer 66 to the TV monitor 71, and an OSD video image is superposed on a television broadcast video image displayed on the TV monitor 71.

That is, the OSD video data supplied from the TV microcomputer 66 is inputted to the OSD synthesizing section 93a, which is located between the second AV selector 67 and the TV monitor 71. The TV microcomputer 66 receives, at the remote control light receiving section 75, a command inputted using, for example, an enter key of a remote control device (Fig. 5) which will be described later. Further, based on the received command, the TV microcomputer 66 activates OSD on the TV monitor 71.

Next described is data transmitted between the wireless center 3 and the TV main unit 5. As illustrated in Fig. 4, in the wireless AV system 1 of the present invention, transmitting/receiving data 131, which is exchanged between the wireless center 3 side and the TV main unit 5 side, is transmitted/received between the first SS wireless transmitting engine 55 and the second SS wireless transmitting/receiving engine 77 in a periodic cycle defined by an isocycle 132. A transmitting/receiving data packet is constituted of an R packet 133, a gap 134, and an L packet 135. The R packet 133 is transmitted from the wireless center 3, i.e., route (R) to the TV main unit 5, i.e., leaf (L). The L packet 135 is transmitted from the TV main unit 5, i.e., leaf (L) to the wireless center 3, i.e., route (R). The gap 134 intervenes between the R packet 133 and the L packet 135.

The R packet 133 includes a long preamble (1Mbps) and other data (11MHz). Within a period of 192 µs, the long preamble (1Mbps) includes synchronous data 141 and PHY header data 143. On the other hand, the other data includes MAC header 145, control data (CB) 147, status command data 151 including asynchronous data, and synchronous data (isochronous data) 153. The status command data 151 includes a status command transmitted from the wireless center 3 to the TV main unit 5. The synchronous data 153 is AV stream data in the MPEG2 format.

Subsequent to the R packet 133, the gap section (GAP) 134 having a period of 129 µs is provided. Then, the L packet 135, which is transmitted from the TV main unit 5 side to the wireless center 3, is provided. Like the R packet 133, the L packet 135 includes a long preamble (1Mbps) having 161 and 163, and other data (11MHz). The other data includes a MAC header section 165, a retry tag 167, and an asynchronous data section 171. The asynchronous data section 171 includes a status command transmitted from the TV main unit 5 side to the wireless center 3 side. As described later, command data, which is selected and confirmed on the GUI displayed on the TV monitor 71, is included in the asynchronous data section 171 and transmitted from the TV main unit 5 side to the wireless center 3 side. At the wireless center 3 side, the instructed command is carried out based on the command data. All the above-mentioned data are transmitted in a cycle of 3.6 ms.

Fig. 5 illustrates an exemplary structure of the remote control device 200, which serves as an input section for performing various operations through the remote control light receiving section 75 at the TV main unit 5 side. As shown in Fig. 5, the remote control device 200 includes a channel number input section 201, a menu display button 202, selection buttons 203a, an enter button 203b, up-down channel selection buttons 205, a power switch 207, and an (external) input switching button 208. Figs. 6 and 7 are views representing examples of an OSD video image to be displayed on the TV monitor 71, when the TV microcomputer 66 carries out display based on an input using the remote control device 200.

As illustrated in Fig. 8, when the menu button 202 is pressed using the remote control device 200 (S1), for example, display shown in Fig. 6(a) appears on the TV monitor 71 (S2). In the menu display, video tuning, energy-saving setting, main unit setting, channel setting, and timer setting are displayed as examples. Here, the channel setting is selected (S3), and the display shown in Fig. 6(b) appears (S4). As shown in Fig. 6(b), in a menu related to the channel setting, auto preset, manual memory, area number, and execution are displayed, for example. When auto preset is selected (S5), the menu display changes to the display shown in Fig. 6(c). In the menu display shown in Fig. 6(c), by pressing the enter button 203b, execution of the auto preset is determined. Then, as shown in Fig. 7(a), by selecting execution using the up and down selection buttons 203a, and pressing the enter button 203b, execution of the auto preset is confirmed (S7). The above steps are carried out by the TV main unit 5 side. Through the above procedural steps, a process for causing the wireless center 3 side to carry out steps (auto preset process) is determined. The determination is converted to a command for the wireless center 3 side (S7), and transmitted from the TV main unit 5 side to the wireless center 3 side (S8). For transmission, the command is included in the asynchronous data section 171 shown in Fig. 4.

When the command for executing the auto preset is received by the wireless center 3 side, as shown in Fig. 7(b), an indication for notifying that the auto preset is being processed is displayed on a channel-related display screen. At the completion of the auto preset process (S9), associated information (channel identification information) is sent to the TV main unit 5 side (S 10), and a channel number list 213 is displayed on the TV monitor 71 as shown in Fig. 7(c). In the channel number list 213, stored channel numbers are listed from the upper left in order of channel selection numbers of the associated direct channel selection buttons. In the example represented in Fig. 7(c), channel numbers 1, 3, 4, 6, 8, 10, and 12 are stored by being associated with the same channel selection numbers, respectively, and channels 38, 42, and 46 from among the channels 13 through 62 are stored in blank channel selection numbers. Channels and their positions on the remote control device are associated in such a manner that the position of channel 1 is for channel 1, the position of channel 2 is for channel 14, the position of channel 3 is for channel 3, the position of channel 4 is for channel 4, the position of channel 5 is for channel 38, etc. As the channel identification information, for example, these sets of associated information are transmitted to the TV main unit 5 side and stored in the EEPROM 65 illustrated in Fig. 3.

In the wireless AV system 1 of the present embodiment, the TV microcomputer 66 provided in the TV main unit 5 side is capable of generating OSD video to be displayed on the TV monitor 71, thereby carrying out all operations including performing a selection of the processes at the TV main unit 5 side. Thus, the conventional problem is overcome in which a display response is degraded due to conversion of video signals including OSD video to an AV stream.

The above description is made in line with the embodiment of the present invention. However, the present invention is not limited to the embodiment, and various modifications are possible. Although description is with regard to a system for receiving television broadcasts by way of example, the present invention can be applied to other AV systems. Further, as an example, the description has been made with regard to an application to wireless AV devices. However, an application to AV devices connected to the network with wires is also possible. Further, As to the process for switching, a mute image processing is described above as an example. However, other image processing may be performed.

### [Second Embodiment]

In the present embodiment, description is made as to an auto preset process having an arrangement, which is different from the arrangement of the auto preset described in the first embodiment. Note that, constituting elements having the same functions as those described in the first embodiment are indicated by the same reference numerals, and their explanations are omitted. Further, the various features described in the first embodiments may be suitably combined and applied also in the second embodiment.

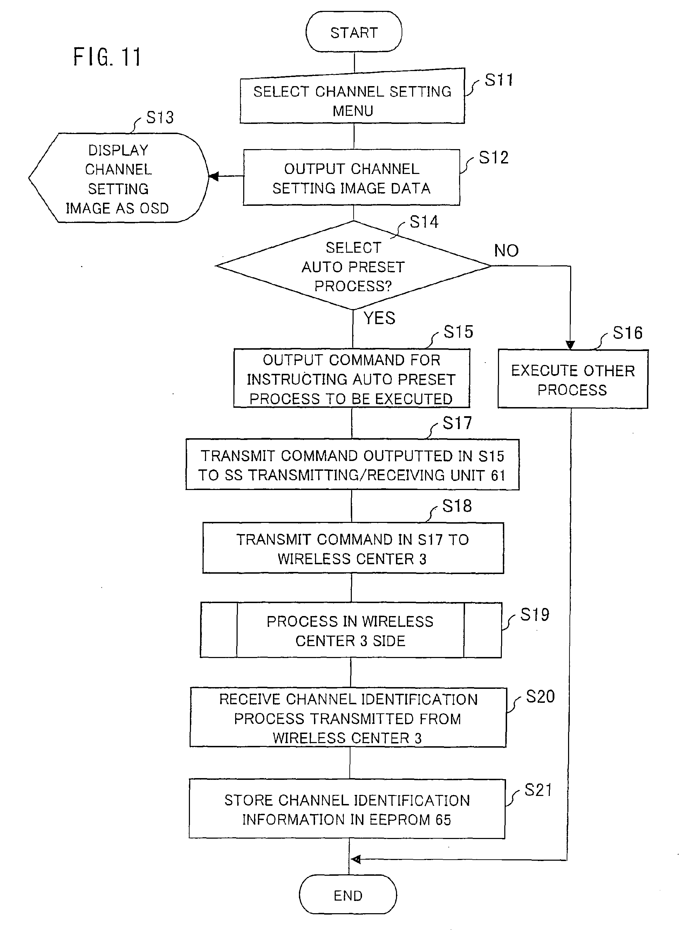

Fig. 11 is a flow chart representing a procedural steps to be carried out by the TV main unit side. The steps are part of the auto preset process of the present embodiment.

In the following description, assume that, as an OSD, a video image for selecting menu as shown in Fig. 6(a) is displayed on a television broadcast video image displayed on the TV monitor 71. In S11 shown in Fig. 10, when a user selects the channel setting menu by operating the remote control device 200 (S11), the TV microcomputer 66 reads data of the channel setting video from the EEPROM 65, and outputs the data to the OSD synthesizing section 93a (S12). Consequently, as an OSD, the channel setting video image shown in Fig. 6(b) is displayed on the TV monitor 71 (S13).

When the user selects auto preset from the menu displayed on the channel setting video image (Yes in S14), the TV microcomputer 66 outputs a command instructing the auto preset process to be executed (S15). When another process is selected (No in S14), the other process is executed (S16).

The command outputted from the TV microcomputer 66 in S15 is transmitted to the SS transmitting/receiving unit 61 (S17). Then, the transmitting/receiving unit 61 receives and then transmits the command to the wireless center 3 through the second SS wireless transmitting/ receiving engine 77 under the control of the second SS-CPU 85 (S18). In this way, the process is shifted to the wireless center 3 side (S19).

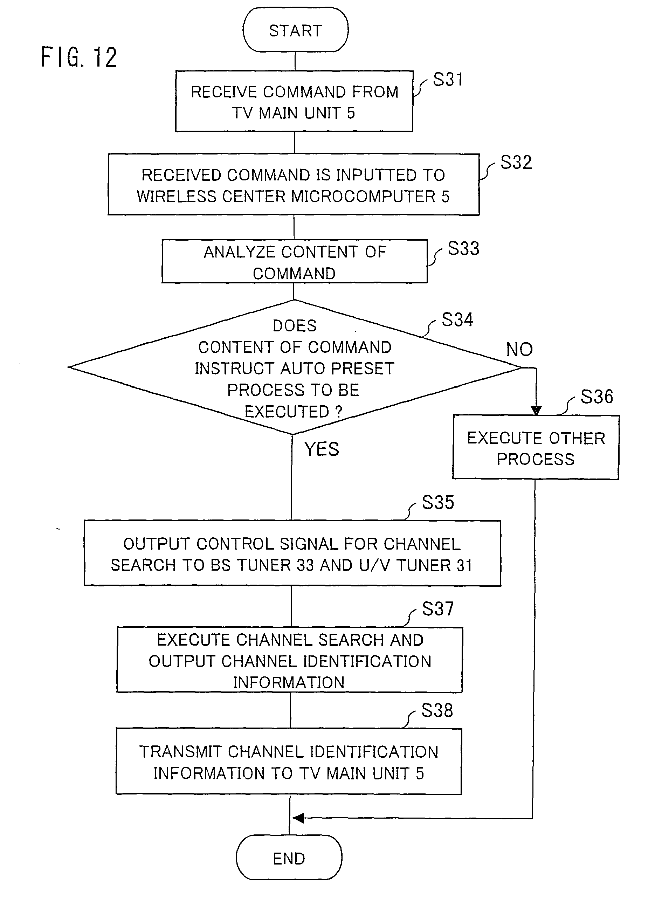

With reference to Fig. 12, next described are the steps to be carried out in the wireless center 3 receiving the command. Fig. 12 is a flow chart representing procedural steps to be carried out in the wireless center 3 side. Specifically, Fig. 12 shows steps to be carried out in S19 of Fig. 11 in detail.

When the command in S18 (see Fig. 11) is transmitted from the TV main unit 5, the command is received by the SS transmitting/receiving unit 45 in the wireless center 3 (S31). Then, the received command is inputted to the wireless center microcomputer 41 under the control of the first SS-CPU 57 (S32).

Further, the wireless center microcomputer 41 receives the command and analyzes a content of the command (S33). When the content of the command instructs the auto preset operation (Yes in S34), the wireless center microcomputer 41 outputs a control signal to perform a channel search to the BS tuner 33 and the U/V tuner 31 (S35). In S33, when the content of the command instructs another process (No in S34), the other process is executed (S36).

The tuners 31 and 33 receive the control signal for the channel search and execute the channel search, and output channel identification information to the wireless center microcomputer 41 (S37). The channel identification information indicates receivable channels and unreceivable channels.

Further, the wireless center microcomputer 41 receives and transmits the channel identification information to the SS transmitting/receiving unit 45. Then, the SS transmitting/receiving unit 45 transmits the channel identification information to the TV main unit 5 through the first SS wireless transmitting/receiving engine 55 under the control of the first SS-CPU 57 (S38).

With reference to Fig. 11, the following describes the steps to be carried out in the TV main unit 5 after the channel identification information is transmitted from the wireless center 3.

When transmitted from the wireless center 3, the channel identification information is received by the second SS wireless transmitting/receiving engine 77 under the control of the second SS-CPU 85 (S20). Then, the received channel identification information is stored in the EEPROM 65 under the control of TV microcomputer 66 (S21).

As described above, in the wireless AV system 1 of the present embodiment, the channel identification information (associated data), which indicates receivable channels and unreceivable channels, has been stored in the EEPROM 65 in the TV main unit 5. Therefore, when an OSD video image indicating receivable channels as shown in Fig. 7(c) is superposed on a video image of a television program displayed on the TV monitor 71, the TV microcomputer 66 generates OSD video data based on the channel identification information stored in the EEPROM 65. Then, the OSD synthesizing section 93a carries out display by superposing the OSD video image on the video image of the television program displayed on the TV monitor 71.

That is, according to the present embodiment, when an OSD video image is displayed based on data supplied from the wireless center 3, the OSD video image is generated on the TV main unit 5 side, not on the wireless center 3 side. Thus, compared to a conventional arrangement in which an OSD video image is generated on the wireless center 3 side, a speed for responding to a user's input for instructing the OSD to be activated is improved because there is no need of encoding and decoding data of the superposed video image, in which an OSD video image is superposed on a television program video image.

Specifically, as described in the present embodiment, when OSD video data is generated based on data stored in the EEPROM 65, the OSD is realized immediately after a user's input for instructing the OSD to be activated.

### [Third Embodiment]

In the present embodiment, description is made as to a process for carrying out OSD of an EPG video image (OSD video image) as a GUI on the TV monitor 71.

Note that, constituting elements having the same functions as those described in the first embodiment are indicated by the same reference numerals, and their explanations are omitted. Further, the various features described in the first embodiments may be suitably combined and applied also in the third embodiment.

In the wireless AV system 1 of the present embodiment, the wireless center 3 receives digital broadcasting ground waves at the U/V tuner 31, and EPG data is added to the digital broadcasting ground wave. Then, the wireless center 3 transmits the EPG data to the TV main unit 5. In the TV main unit 5, the TV microcomputer 66 causes the EPG data (associated data), which is sent from the wireless center 3, to be stored in the EEPROM 65.

Note that, when the wireless center 3 receives satellite digital broadcast waves at the BS tuner 33, the wireless center 3 may transmit EPG data, which is added to the broadcast waves, to the TV main unit 5.

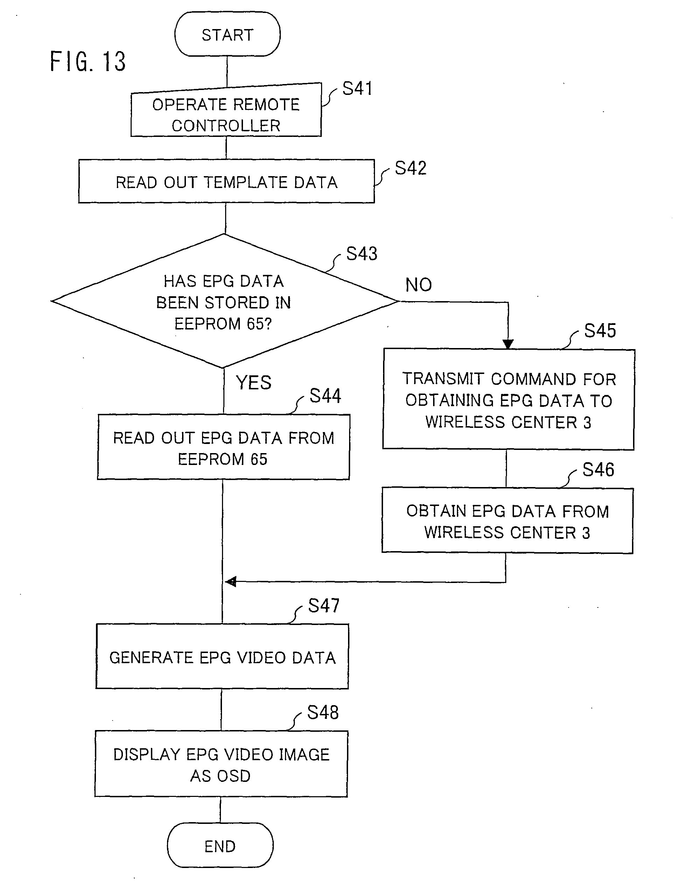

Fig. 13 is a flow chart representing procedural steps of displaying an EPG video image as an OSD. When a user first inputs an instruction for causing EPG display to be activated by operating the remote control device 200 (S41), the TV microcomputer 66 reads template data of the EPG video image from the EEPROM 65 (S42). Note that, the template data is standard data required for causing the EPG video image to be displayed as a GUI.

Further, the TV microcomputer 66 determines whether or not EPG data has been stored in the EEPROM 65 (S43). When EPG data has been already stored in the EEPROM 65 (Yes in S43), the TV microcomputer 66 reads out the EPG data (S44). On the other hand, when the EPG data has not been stored in the EEPROM 65 (No in S43), the TV microcomputer 66 transmits a command for obtaining EPG data to the wireless center 3 through the SS transmitting/receiving unit 61 (S45). Correspondingly, in the wireless center 3 side, the wireless center microcomputer 41 obtains EPG data from the digital ground wave received by the U/V tuner 31, and transmits the EPG data to the TV main unit 5. In this way, the TV microcomputer 66 obtains the EPG data from the wireless center 3 (S46).

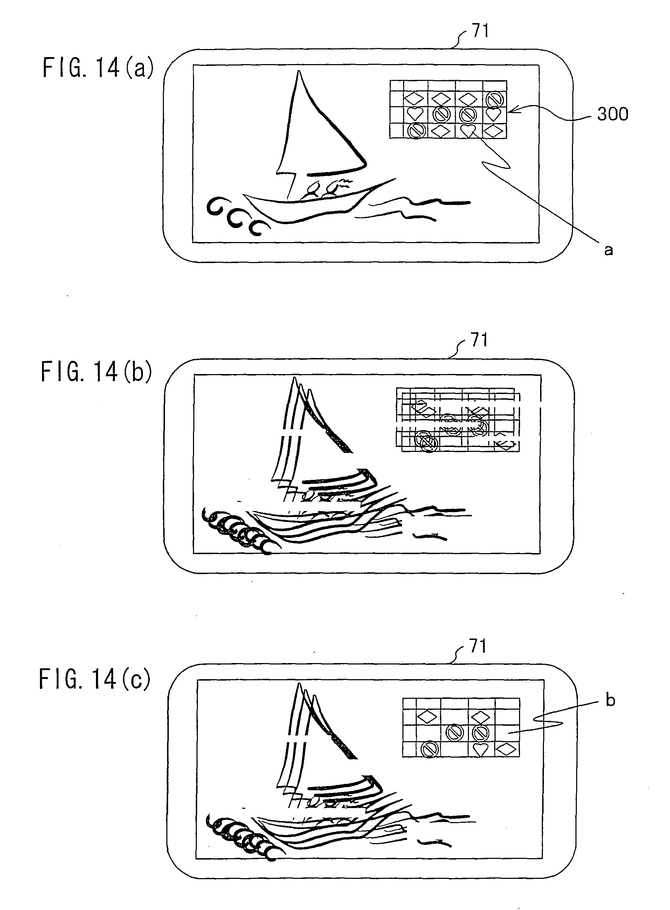

After receiving the EPG data through S44 or S46, the TV microcomputer 66 generates EPG video data by collating content information of programs (program names, casts, etc.) indicated in the EPG data to the template data (S47). Then, the EPG video data is transmitted from the TV microcomputer 66 to the OSD synthesizing section 93a. In this way, an EPG video image is displayed as an OSD on a television video image displayed on the TV monitor 71 (S48). In Fig. 14(a), a reference mark 300 represents an example of the EPG video image. Note that, in Fig. 14(a), graphic symbols are displayed within frames of the EPG video 300 for simplicity. However, content information of programs is actually to be displayed.

As described above, in the wireless AV system 1 of the present embodiment, the EPG data is obtained either from (i) the TV microcomputer 66 which reads the EPG data from the EEPROM 65 in the TV main unit 5 side, or (ii) the wireless center 3. Then, based on the EPG data, a step for generating an EPG video image is carried out. Further, the OSD synthesizing section 93a carries out a step for superposing the EPG video image on a television broadcast video image displayed on the TV monitor 71.

That is, according to the present embodiment, the step for generating an EPG video image and the step for superposing the EPG video image on a television broadcast video image are carried out on the TV main unit 5 side, not on the wireless center 3 side. Thus, compared to a conventional arrangement in which the step for generating an EPG video image and the step for superposing the EPG video image on a television broadcast video image is performed on the wireless center 3 side, a speed for responding to a user' s input for instructing the OSD to be activated is improved because there is no need of encoding and decoding data of the superposed video image, in which an EPG video image is superposed on a video image of television program.

Assume that the TV microcomputer 66 generates the EPG video data based on the EPG data and the template data, which are stored in the EEPROM 65 (S44, S47). When a degraded communication status occurs between the TV main unit 5 and the wireless center 3 when an EPG video image is displayed as an OSD, a video image of a television program or the like displayed on the TV monitor 71 is deteriorated. However, the EPG video image displayed as an OSD is not deteriorated. This is because the EPG video data is generated in the TV main unit 5 based on the EPG data, which has been already sent from the wireless center 3 and stored in the EEPROM. Thus, the display of the EPG video image is not affected by a good or bad communication status.

Further, assume that the microcomputer 66 generates the EPG video data based on (i) the template data stored in the EEPROM 65 and (ii) the EPG data obtained from the wireless center 3 without accessing the EEPROM 65 (S46, S47). When a degraded communication status occurs between the TV main unit 5 and the wireless center 3 when the EPG video image is displayed as OSD, part of the EPG video image displayed as an OSD, i.e., portions indicating content information of programs, is deteriorated. However, display of a standard area of the EPG video image is not deteriorated. This is because the standard area of the EPG video image is generated based on the template data stored in the EEPROM 65. Thus, the display of the standard area is not affected by a good or bad communication status.

Further, description is made more specifically with reference to figures. According to a conventional arrangement in which the step for generating an EPG video image and the step for superposing the EPG video image on a video image of a television program are carried out in the wireless center 3 side, when a degraded communication status occurs between the TV main unit 5 and the wireless center 3, display of a video image displayed on the TV monitor 71 is entirely deteriorated as illustrated in Fig. 14(b).

On the other hand, assume that the EPG video data is generated in the TV main unit 5 side based on (i) the template data stored in the EEPROM 65 and (ii) the EPG data obtained from the wireless center 3 without accessing the EEPROM 65. In this case, when a degraded communication status occurs between the TV main unit 4 and the wireless center 3, despite the deterioration in display of a video image of a television program or the like on the TV monitor 71, display of the standard area of an EPG video image is not deteriorated as illustrated in Fig. 14(c). However, part of the display, i.e., portions indicating content information of programs, is not still fully displayed (reference mark b in Fig. 14(c)). This is because the content information is generated based on the EPG data, which is affected by a good or bad communication status when obtained.

In the above embodiments, as an example, the description is made with regard to an arrangement in which (i) the second AV selector 67 for generating a television program video image is to be displayed on the TV monitor 71, and (ii) the OSD synthesizing section 93a for superposing an OSD image on a television program video image displayed on the TV monitor are realized by hardware. However, the arrangement is not limited to the example. The AV selector 67 and the OSD synthesizing section 93a may be realized in combination with a program for realizing the above functions, and hardware (computer) for implementing the program.

Further, the wireless AV system of the present embodiments may include an AV output device and a wireless center, the AV output device having: a display section for carrying out display based on broadcast information; a GUI control section for causing the display section to display a GUI and generating control data corresponding to a control element selected based on the displayed GUI; and a first transmitting/receiving section for transmitting the control data and receiving the broadcast information, the wireless center including: a tuner section for performing channel selection with reference to the broadcast information; and a second transmitting/receiving section, which is connected to the first transmitting/receiving section wirelessly, for transmitting broadcast information of a channel selected by the tuner section to the first transmitting/ receiving section, and receiving the control data from the first transmitting/receiving section.

Further, in addition to the above arrangement, the wireless AV system of the present embodiments may include an AV output device and a wireless center, the AV output device having: a display section for carrying out display based on broadcast information; a GUI control section for generating an OSD output causing the display section to display a GUI and generating control data corresponding to a control element selected based on the displayed GUI; and a first transmitting/receiving section for transmitting the control data and receiving the broadcast information, the wireless center including: a tuner section for performing channel selection with reference to the broadcast information; and a second transmitting/receiving section, which is connected to the first transmitting/receiving section wirelessly, for transmitting broadcast information of a channel selected by the tuner section to the first transmitting/receiving section, and receiving the control data from the first transmitting/receiving section.

In addition to the above arrangement, in the wireless AV system of the present embodiments, the AV output device may include a decoder for decoding an operation command in regard to the GUI.

Further, in addition to the above arrangement, the wireless AV system of the present embodiments may be connected to control data input determining means for determining the control data based on a GUI displayed on the display section.

The AV output device of the present embodiments, which is connected to a wireless center having: a tuner section for performing a selection of a channel related to broadcast information; and a second transmitting/receiving section for transmitting broadcast information of a channel selected by the tuner section, may include a display section for carrying out display based on the broadcast information; a GUI control section for causing the display section to display a GUI and generating control data corresponding to a control element selected based on the displayed GUI; and a first transmitting/receiving section for transmitting the control data to the wireless center and receiving the broadcast information.

Further, in addition to the above arrangement, the AV output device of the present embodiments, which is wirelessly connected to a wireless center having a tuner section for performing channel selection with reference to broadcast information, may include a display section, and an OSD generating section for generating an OSD so as to provide a GUI on the display section.

Further, in addition to the above arrangement, in the AV output device of the present embodiments, the OSD generating section may add OSD data to data in which encoded stream video sent from the wireless center has been decoded.

Further, the wireless center of the present embodiments may be connected to an AV output device having: a display section for carrying out display based on broadcast information; a GUI control section for causing the display section to display a GUI and generating control data corresponding to a control element selected based on the displayed GUI; and a first transmitting/receiving section for transmitting the control data and receiving the broadcast information, and include a tuner section for performing channel selection with reference to the broadcast information, and a second transmitting/receiving section for transmitting broadcast information of a channel selected by the tuner section to the AV output device and receiving the control data.

Further, for providing a GUI of the present embodiments in an AV output device, which is wirelessly connected to a wireless center having a tuner section for performing channel selection with reference to broadcast information, a method may include a first step for decoding input content according to an input for operating a GUI, a second step for generating OSD of the decoded input content, and a third step for causing the display section to display the generated OSD.

Further, in addition to the above steps, the method for providing a GUI of the present invention may further include the steps of: selecting and determining control data based on the displayed GUI; and receiving the broadcast information and transmitting the determined control data to the wireless center.

In the above wireless AV system, a GUI to be displayed on the display section may be generated in the AV output device side, and operation of the GUI may be performed in the AV output device side.

Further, in the above wireless AV system, a GUI to be displayed on a liquid crystal monitor is generated in the OSD outputting section provided in the AV output side, and all operations such as selecting processes are performed on the monitor side. This improves a poor display response caused by converting video signals including GUI video to an AV stream.

In the above wireless AV system, a GUI to be displayed on the display section may be generated in the AV output device side, and operation of the GUI may be performed in the AV output device side.

Further, a wireless terminal of the present invention, which transmits/receives data to/from a base device, may include receiving means for receiving, from the base device, first video data and associated data being associated with the base device and/or the wireless terminal; first video generating means for generating a first video image based on the first video data; second video generating means for generating a second video image based on the associated data; and video superposing means for superposing the second video image on the first video image and displaying the superposed video image on a display section.

Further, a wireless terminal control method of the present invention, which controls a wireless terminal for transmitting/receiving data to/from a base device, may include the steps of: receiving, from the base device, first video data and associated data being associated with the base device and/or the wireless terminal; generating a first video image based on the first video data; generating a second video image based on the associated data; and superposing the second video image on the first video image and displaying the superposed video image on a display section.

According to the above arrangement, first video data is received from the base device and the first video image is generated based on the first video data, while the associated data is received from the base device and the second video image is generated based on the associated data. Further, the second video image is superposed on the first video image, and the superposed video image is displayed on the display section. That is, according to the arrangement, the step for generating the second video image and the step for superposing the second video image on the first video image are carried out in the wireless terminal. Therefore, compared to a conventional arrangement in which the steps are carried out on the base device side, a speed for responding to a user' s input for instructing the OSD to be activated is improved because there is no need of encoding and decoding data of the superposed video image, in which the second video image is superposed on the first video image.

Note that, the first video image includes a television broadcast video image received by the base device, and a video image reproduced by a videocassette recorder or a DVD (digital versatile disk) recorder. The television broadcast video image includes not only a television video image from ground wave analog broadcasts and ground wave digital broadcasts, but also a broadcasting satellite video image, a data broadcast video image, and a video image outputted from a set top box receiving CATV broadcasts (CATV broadcast video). Further, the associated data includes, for example, data indicating a setting status of the base device and/or the wireless terminal, television broadcast data received by the base device (e.g. EPG data), and the like. The second video image includes a GUI video image for operating the base device and/or the wireless terminal, images indicating a setting status of the base device and/or the wireless terminal, an EPG (electronic program guide) video image, and the like.

In addition to the above arrangement, the wireless terminal of the present invention may further include a memory section for storing the associated data received by the receiving means. In the wireless terminal, the second video generating means may generate the second video image based on the associated data stored in the memory section.

According to the above arrangement, the associated data transmitted from the base device is to be stored in the memory section. Thus, at the point when a user inputs an instruction for displaying the superposed video image, if the associated data has been already stored in the memory section, the second video image can be immediately generated.

In addition, even when a degraded communication status occurs between the wireless terminal and the base device, as long as the associated data has been already stored in the memory section at the point when the user performs an input for instructing the superposed video image to be displayed, the second video image can be generated without being affected by the degraded communication status. Thus, the second video image is displayed without being deteriorated.

In addition to the above arrangement, in the wireless terminal of the present invention, it is preferable that the second video generating means generate the second video image by adding the associated data to template data stored by the wireless terminal.

According to the above arrangement, the second video image is generated by adding the associated data to the template data (standard data), so as to have a standard area and a non-standard area. Since the template data is stored in the wireless terminal, even when a degraded communication status occurs between the wireless terminal and the base device, the standard area of the second video image as the superposed video image is not affected by the degraded communication status.

On the other hand, in a conventional arrangement in which the step for generating the second video image and the step for superposing the second video image on the first video image are carried out on the base device side, when a degraded communication status occurs between the wireless terminal and the base device, the superposed video image including the standard area of the second video image is entirely deteriorated.

In addition to the above arrangement, in the wireless terminal of the present invention, it is preferable that the first video be television broadcast video, and that the associated data be EPG data.

According to the above arrangement, the second video image is generated based on the EPG data, and the second video image is superposed on a television broadcast video image. Therefore, it is possible for a user to view a television program while confirming a program guide. Note that, the television broadcast video image includes not only a television video image for ground wave analog broadcasts and ground wave digital broadcasts, but also a satellite broadcast video image, a data broadcast video image, and a video image outputted from a set top box receiving CATV broadcasts (CATV broadcast video).

The base device of the present invention includes transmitting means for transmitting the first video data and the associated data to the wireless terminal.

According to the above arrangement, the step for generating the second video image and the step for superposing the second video image on the first video image are carried out in the wireless terminal. Therefore, compared to an arrangement in which these processes are carried out on the based device side, a speed for responding to a user' s input for instructing the OSD to be activated is improved because there is no need of encoding and decoding the superposed video data.

The wireless system of the present invention may include the wireless terminal, and a base device having transmitting means for transmitting the first video data and the associated data to the wireless terminal.

According to the above arrangement, the step for generating the second video and the step for superposing the second video on the first video are carried out in the wireless terminal. Therefore, compared to an arrangement where these processes are carried out on the based device side, a speed for responding to a user's input for instructing the OSD to be activated is improved because there is no need of encoding and decoding data of the superposed video image, in which the second video image is superposed on the first video image.

Note that, the wireless terminal may be realized by a computer. In this case, by causing the computer to function as the sections, a computer-readable recording medium, which stores a wireless terminal control program for realizing the wireless terminal in the computer, is within the scope of the present invention.

The present invention is not limited to the above embodiments, and various modifications are possible within the scope of claims. Embodiments obtained by suitably combining the technical art disclosed in the above embodiments will be within the scope of invention.

It will be obvious that the invention thus described may be varied in many ways. Such variations are not to be regarded as a departure from the spirit and scope of the invention, but rather as being obvious to these skilled in the art and included within the spirit and scope of the following claims.

### INDUSTRIAL APPLICABILITY

The wireless system of the present invention is preferably used in a home AV network system such as a display-separated wireless TV receiver, for example, which transmits video and/or audio data wirelessly. However, the present invention is not limited to this, and may be widely applied in wireless communication devices such as portable telephones/PHS (personal handy-phone system®), PDAs (personal digital assistants), personal computer monitors having a TV receiving function, or the like.

## Claims

1. A wireless terminal for transmitting/receiving data to/from a base device, the wireless terminal comprising:
receiving means for receiving, from the base device, first video data and associated data being associated with the base device and/or the wireless terminal;
first video generating means for generating a first video image based on the first video data;
second video generating means for generating a second video image based on the associated data; and
video superposing means for superposing the second video image on the first video image and displaying the superposed video image on a display section.

2. The wireless terminal of claim 1, further comprising a memory section for storing the associated data received by the receiving means,
wherein the second video generating means generates the second video image based on the associated data stored in the memory section.

3. The wireless terminal of claim 1 or 2, wherein the second video generating means generates the second video image by adding the associated data to template data stored by the wireless terminal.

4. The wireless terminal of any one of claims 1 through 3,
wherein the first video image is a television broadcast video image, and
wherein the associated data is EPG data.

5. A base device comprising transmitting means for transmitting the first video data and the associated data to the wireless terminal of any one of claims 1 through 4.

6. A wireless system, comprising:
the wireless terminal of any one of claims 1 through 4; and
a base device having transmitting means for transmitting the first video data and the associated data to the wireless terminal of any one of claims 1 through 4.

7. A wireless terminal control method for transmitting/receiving data to/from a base device,
the method comprising the steps of:
receiving, from the base device, first video data and associated data being associated with the base device and/or the wireless terminal;
generating a first video image based on the first video data;
generating a second video image based on the associated data; and
superposing the second video image on the first video image and displaying the superposed video image on a display section.

8. A wireless terminal control program, which operates the wireless terminal of any one of claims 1 through 4,
the control program causing a computer to function as each of the means.

9. A computer-readable recording medium storing the wireless terminal control program of claim 8.
